# EUROPÄISCHE PATENTSCHRIFT

(11) **EP 4 140 612 B1**
(45) Veröffentlichungstag und Bekanntmachung des Hinweises auf die Patenterteilung: **05.11.2025**
(21) Anmeldenummer: 21193602.6
(22) Anmeldetag: 27.08.2021
(51) Int. Cl.: B21D 19/16, B21D 41/04, B21D 53/88, B21J 9/02, B21K 21/14, C21D 9/00, B21D 51/16, B21K 21/12, B60R 21/26

(54) **VERFAHREN ZUR HERSTELLUNG EINES ROHRPRODUKTES AUS STAHL, INSBESONDERE EINES AIRBAGROHRPRODUKTES**
METHOD FOR PRODUCING A STEEL PIPE PRODUCT, IN PARTICULAR AN AIR BAG PRODUCT
PROCÉDÉ DE FABRICATION D'UN PRODUIT TUBULAIRE EN ACIER, EN PARTICULIER D'UN PRODUIT TUBULAIRE POUR COUSSINS GONFLABLES

(43) Veröffentlichungstag der Anmeldung: 01.03.2023
(73) Patentinhaber: Benteler Steel/Tube GmbH & Co. KG, 33104 Paderborn (DE)
(72) Erfinder: Tegethoff, Dirk, 33154 Salzkotten (DE); Lücke, Daniel, 33034 Brakel (DE); Wellpott, Marcel, 33102 Paderborn (DE)
(74) Vertreter: Ksoll, Peter

(56) Entgegenhaltungen:
- EP-A1- 1 704 944
- WO-A2-2021/034037
- CH-A- 322 716
- CN-A- 103 817 490
- DE-B4- 19 714 753
- US-A- 2 357 110

## Beschreibung

Die Erfindung betrifft ein Verfahren zur Herstellung eines Rohrproduktes aus Stahl, insbesondere eines Airbagrohrproduktes. Hochfeste beziehungsweise höchstfeste Rohrprodukte aus Stahl finden in vielen technischen industriellen Anwendungen Verwendung. Insbesondere werden solche Rohrprodukte auch als Airbagrohre verwendet.

In der DE 197 14 753 B4 ist ein Verfahren zur Herstellung eines solchen Rohrproduktes beschrieben. Dabei wird ein rohrförmiges Werkstück aus Metall in eine Form eingeführt, deren Durchmesser wesentlich größer ist als der des Werkstücks, wobei die Form des Werkstücks von separaten Antrieben in gleicher Drehrichtung parallel zueinander ausgerichteten Längsachsen rotierend angetrieben werden und durch eine Vorschubbewegung der Form und des Werkstückes Pressdruck für eine Umformung erzeugt wird. Das Werkstück rollt während dieser Umformung am Umfang der Form ab und das Ende des Werkstückes in der Form wird durch Reibungswärme aufgeschmolzen und zu einem Behälterboden geformt. Dabei wird in das Werkstück ein Dorn eingeführt, der während der Umformung einen innenseitigen Druck auf den sich formenden Behälter ausübt und mit dem Werkstück rotiert.

Ein derartiges Fließrollieren baut auf dem Verfahrensprinzip des Drückens beziehungsweise Druckwalzens auf. Der wesentliche Unterschied hierzu besteht darin, dass das Werkzeug keine Rolle ist, die eine bestimmte Form abfährt, sondern ein topfförmiges Werkzeug, in das der gesamte Formverlauf eingearbeitet ist. Die Bauteile, die nach diesem Verfahren hergestellt werden können, müssen allerdings rotationssymmetrisch sein. Ein derartiges Verfahren ist unter folgendem Link detailliert beschrieben:
https://gfu-forming.de/technologien-umformmaschinen/fliessrollieren/

Auch in der DE 196 07 010 C1 ist ein derartiges Verfahren beschrieben.

Weiterhin offenbart die EP 1 704 944 A1 ein Verfahren nach dem Oberbegriff des

Patentanspruchs 1, bei dem ein Abschrägen des dortigen Rohres durch ein drehendes Zerspanen erfolgt.

Obwohl mit diesem Verfahren zufriedenstellende Ergebnisse für Rohrprodukte, insbesondere Airbagrohrprodukte erzielt werden können, haben derartige Herstellungsverfahren entscheidende Nachteile. Sowohl durch die Rotation des Rohrproduktes als auch des Werkzeuges bei der Herstellung des Rohrproduktes sind komplexe Anlagen notwendig, um solche Rohrprodukte herzustellen. Zudem ist die Fertigung sehr zeitaufwändig und die Rohroberfläche kann dabei negativ beeinflusst werden.

Es ist daher Aufgabe der Erfindung ein einfacheres Herstellungsverfahren für derartige Rohrprodukte, insbesondere Airbagrohrprodukte bereit zu stellen, um den Realisierungs- und Anlagenaufwand deutlich zu reduzieren.

Gelöst wird diese Aufgabe durch ein Verfahren mit allen Merkmalen des Patentanspruchs 1. Vorteilhafte Ausgestaltungen der Erfindung finden sich in den Unteransprüchen.

Das erfindungsgemäße Verfahren zur Herstellung eines Rohrproduktes, insbesondere eines Airbagrohrproduktes aus Stahl weist dabei folgende Verfahrensschritte auf:
a) Bereitstellen eines Stahlrohres,
b) Umformen des Stahlrohres zu einer Vorgeometrie, wobei in einem Endbereich ein Außendurchmesser des Stahlrohres durch axiales Verschieben in ein Außenwerkzeug reduziert wird und
   Kalibrieren eines Innendurchmessers der Vorgeometrie wobei die Vorgeometrie weiterhin in dem Außenwerkzeug eingelegt ist und ein Innendorn mit einem dem Innendurchmesser der kalibrierten Vorgeometrie entsprechenden Außendurchmesser in den Endbereich der Vorgeometrie eingeführt und die Vorgeometrie dabei gegen das Außenwerkzeug gepresst wird, sodass der Innendurchmesser der Vorgeometrie durch Umformen kalibriert wird,,
c) Entnahme der Vorgeometrie aus dem Außenwerkzeug und Entnahme des Innendorns aus der Vorgeometrie,
d) Axiales Verschieben der Vorgeometrie in ein Einziehwerkzeug mit einer eine topfförmige Konkavität aufweisende Einrollkontur bei gleichzeitigem Umformen der Vorgeometrie zum Rohrprodukt mit einer stirnseitig zentralen, rotationssymmetrischen Auslassöffnung,
e) Entnahme des Rohrproduktes aus dem Einzelwerkzeug.

Das erfindungsgemäße Verfahren zeichnet sich dadurch aus, dass sowohl im Verfahrensschritt b) als auch im Verfahrensschritt d) auf eine Rotation des Stahlrohrs sowie der Vorgeometrie und des Außenwerkzeuges verzichtet wird.

Durch das erfindungsgemäße Verfahren ist der Realisierungs- beziehungsweise Anlagenaufwand zur Herstellung eines erfindungsgemäßen Rohrproduktes beziehungsweise Airbagrohrproduktes deutlich reduziert, da im Vergleich zu der Herstellung solcher Rohrprodukte mittels Fließrollieren sowohl auf eine Rotation des Werkstückes als auch des Werkzeuges vollständig verzichtet werden kann. Dadurch, dass nur axiale Bewegungen des Rohrproduktes und/oder der verwendeten Werkzeuge notwendig sind, ist nicht nur der Realisierungs- beziehungsweise Anlagenaufwand deutlich reduziert. Vielmehr lässt sich dadurch auch der Umformprozess des bereitgestellten Stahlrohres schneller und kostengünstiger gestalten. Weiterhin wird durch die Vermeidung des Rotierens des Stahlrohres und/oder des Werkzeuges auch eine sehr hohe Reibungstemperatur vermieden, sodass durch die Reduktion der Umformtemperaturen die Zunderbildung deutlich reduziert werden kann. Auch wird durch die erfindungsgemäßen mehrstufigen Umform- und Kalibrierprozesse der Zerspanungsaufwand bei der Herstellung des Rohrproduktes minimiert, wobei eine Zerspanung für die Auslassöffnung sogar obsolet wird.

Nach einer ersten vorteilhaften Ausgestaltung des erfindungsgemäßen Verfahrens ist es vorgesehen, dass das Umformen in Schritt b) als Kaltumformen beziehungsweise Kalteinziehen erfolgt. Insbesondere durch diese Maßnahme wird im Vergleich zum aus dem Stand der Technik bekannten Fließrollieren eine Reduktion der Umformtemperatur erreicht, die zu einer erheblichen Reduzierung der Zunderbildung beiträgt.

In die gleiche Richtung zielt die Ausgestaltung des erfindungsgemäßen Verfahrens, dass nach Schritt b ein weiteren Schritt, nämlich Kalibrieren eines Innendurchmessers der Vorgeometrie durchgeführt wird, wobei die Vorgeometrie weiterhin in dem Außenwerkzeug eingelegt ist und ein Innendorn mit einem dem Innendurchmesser der kalibrierten Vorgeometrie entsprechenden Außendurchmesser in den Endbereich der Vorgeometrie eingeführt und die Vorgeometrie dabei gegen das Außenwerkzeug gepresst wird, sodass der Innendurchmesser der Vorgeometrie durch Umformen kalibriert wird. Auch dieses Umformen erfolgt als Kaltumformen beziehungsweise Kalteinziehen.

Kalteinziehen beziehungsweise Kaltumformen bedeutet, dass die Umformung zwischen Raumtemperatur von ca. 293 K und einer Temperatur kleiner 473 K insbesondere ohne Vorerwärmung und ohne erwärmte Werkezuge erfolgt. Durch den Verzicht einer Vorerwärmung des Werkstückes oder der Werkzeuge wird auch eine deutliche bessere Energiebilanz erreicht, da beim Fließrollieren die Werkstücke und/oder die Werkzeuge vorerwärmt werden.

Das Einziehen und Kalibrieren gemäß Schritt b) und dem zuvor beschriebenen nachfolgenden Kalibrierschritt vor Schritt c) wird über eine Teillänge des Rohres bzw. des Rohrende durchgeführt. Diese Teillänge kann in einer Ausführungsform der Erfindung durch das Einrollen vollständig endgeformt werden derart, dass am fertigen Rohrprodukt kein im Durchmesser reduzierter Abschnitt mehr vorhanden ist.

Es ist aber auch möglich, dass gezielt eine größere Teillänge eingezogen und kalibriert wird, als beim anschließenden Einrollen verbraucht bzw. genutzt wird, so dass eine Teillänge mit reduziertem und hochmaßhaltig kalibriertem Durchmesser zwischen eingerolltem Rohrende und unverformten Rohrabschnitten verbleibt. Diese Teillänge ist bevorzugt als Befestigungsbereich für Einbauteile und/oder Anbauteile an Rohrprodukt verwendbar.

Nach einem weiteren Gedanken der Erfindung ist es vorgesehen, dass das Umformen in Schritt d) als Warmumformen beziehungsweise Halbwarmumformen erfolgt. Bei einer Stahllegierung bedeutet dies das Vorerwärmen des Werkstückes, hier also der Vorgeometrie auf einen Temperaturbereich zwischen 673 K und der Ac3-Temperatur (ca. um 1173 K bei Stahllegierungen) + 50 K, wodurch ein einfacheres Umformen der Vorgeometrie erreicht wird. Im Falle der Warmumformung erfolgt das Vorerwärmen auf mindestens Ac3-Temperatur zwecks Austenitisierung der Stahllegierung und nach Schritt d) beziehungsweise unmittelbar nach dem im folgenden Absatz beschriebenen optional Fertigformen wird ein Abschrecken zwecks Härten durchgeführt.

Nach einer besonders vorteilhaften Ausgestaltung des erfindungsgemäßen Verfahrens ist es vorgesehen, dass ein Kalibrieren beziehungsweise Fertigformen des Endbereiches samt Auslassöffnung des Rohrproduktes erfolgt, und zwar durch Einlegen eines zweiten Innendorns, der eine der Innenkontur des herzustellenden Endbereiches des Rohrproduktes entsprechende Außenkontur aufweist, und ein axiales Verschieben des zweiten Innendorns samt Rohrprodukt in ein zweites Außenwerkzeug, dessen Innenkontur der Außenkontur des herzustellenden Endbereiches des Rohrproduktes entspricht. Durch diese Ausgestaltung der Erfindung wird in einfacher Weise erreicht, dass der Endbereich des Rohrproduktes in einfacher weise durch axiales Verschieben von Werkzeugen beziehungsweise Innendornen und/oder der Vorgeometrie ohne ein Rotieren der Vorgeometrie beziehungsweise eines der Werkzeuge und/oder des Innendorns erfolgt. Auch hierdurch wird der Realisierungs- beziehungsweise Anlagenaufwand beim erfindungsgemäßen Verfahren deutlich minimiert.

Dabei hat es sich als besonders vorteilhaft erwiesen, dass zum Kalibrieren beziehungsweise Fertigformen der Auslassöffnung ein zweiter Innendorn mit einem stirnseitig zentralen, rotationssymmetrischen Element verwendet wird, dessen Außenkontur der Innenkontur der Auslassöffnung des herzustellenden Rohrproduktes entspricht. Hierdurch ist in einfacher Weise erreicht, dass nicht nur der gesamte Endbereich des Rohrproduktes mit erheblich reduzierten Realisierungs- beziehungsweise Anlagenaufwand ohne ein Rotieren des Rohrproduktes beziehungsweise der Vorgeometrie oder eines der Werkzeuge inklusive Innendornen erfolgen kann.

Um die energetische Bilanz des erfindungsgemäßen Herstellungsverfahrens zu optimieren, ist es vorgesehen, dass das Kalibrieren beziehungsweise Fertigformen des Endbereiches und/oder der Auslassöffnung bei einer Restwärme eines in Schritt d) durchgeführten warmbeziehungsweise halbwarmumformen erfolgt, insbesondere bei einer Temperatur von mindestens 473 K des verwendeten Stahls beziehungsweise der verwendeten Stahllegierung. Bevorzugt wird nach Schritt d) unmittelbar das Kalibrieren beziehungsweise Fertigformen des Endbereichs samt Auslassöffnung durchgeführt. Die Umformbarkeit beim Fertigformen des herzustellenden Rohrproduktes ist dabei umso besser, je höher die Restwärme beim Kalibrieren beziehungsweise Fertigformen des Endbereiches und/oder der Auslassöffnung ist. Außerdem erlaubt ein unmittelbares Fertigformen unter Restwärmenutzung eine Härtung, wenn vor Schritt d) auf >Ac3-Temperatur erwärmt und direkt nach dem Fertigformen das Rohrprodukt rasch abgekühlt beziehungsweise abgeschreckt wird.

Um das Umformen des Stahlrohres beziehungsweise auch der Vorgeometrie möglichst reibungsarm zu realisieren ist es vorgesehen, dass zum Umformen Schmiermittel zwischen dem Stahlrohr beziehungsweise der Vorgeometrie und den Werkzeugen beziehungsweise den Innendornen eingebracht werden. Zumindest für die Warmumformung bzw. Halbwarmumformung ist vorzugsweise ein temperaturbeständiger Schmierstoff vorzusehen.

Nach einem besonderen Gedanken der Erfindung ist es vorgesehen, dass als Stahl für das Stahlrohr eine Stahllegierung und insbesondere ein härtbarer UHS-Stahl verwendet wird. Derartige Stähle bieten die notwendige Stabilität, sodass nach dem erfindungsgemäßen Verfahren hergestellte Rohrprodukte auch hohe Drücke aushalten können, wie sie beispielsweise bei der Verwendung derartiger Rohrprodukte als Airbagrohrprodukte in deren Inneren auftreten können.

Das erfindungsgemäße Verfahren zeichnet sich nach einem besonderen Gedanken der Erfindung deshalb dadurch aus, dass als Werkstoff des Rohres beziehungsweise des daraus herzustellenden Rohrproduktes ein Stahl verwendet wird, der außer Eisen und unvermeidbaren schmelzbedingten Verunreinigungen die folgenden Legierungselemente in Gewichtsprozente aufweist:
C 0,07 0,50, vorzugsweise 0,07 0,20;
Si 0,05 - 0,55;
Mn 0,2 2,5, vorzugsweise 0,4 0,8;
P < 0,025; S < 0,02;
Cr < 2 vorzugsweise 0,8 1,0;
Ti < 0,03, vorzugsweise < 0,015;
Mo < 0,6, vorzugsweise 0,25 0,4;
Ni < 0,6, vorzugsweise 0,2 0,3;
Al 0,001 0,05, vorzugsweise 0,02 0,04; 25
V < 0,5, vorzugsweise < 0,1;
Nb < 0,1, vorzugsweise < 0,06.

Mit Vergütungsstählen dieser Zusammensetzungen können mit dem erfindungsgemäßen Verfahren Rohrprodukte bereitgestellt werden, deren Kerbschlagarbeitswerte von mindestens 70 J/cm² bei 293 K und mindestens 50 J/cm² bei 23 K betragen. Derartige Stähle eignen sich in besonders guter Weise für die Herstellung von Airbagrohren mit einer Zugfestigkeit von mindestens 700 MPa, insbesondere von mindestens 900 MPa.

Ein Airbagrohr, welches nach dem erfindungsgemäßen Verfahren hergestellt wurde, weist eine Rohrwand mit einer Außenfläche und einer Innenfläche auf, wobei an einem Rohrende die Rohrwand in ihrem Durchmesser reduziert ist. Dabei ist wenigstens eine Teillänge mit reduziertem Durchmesser eingerollt und teilweise geschlossen ausgebildet, wobei eine rotationssymmetrische Auslassöffnung die Rohrwand am eingerollten Rohrende stirnseitig begrenzt. Dabei weist die Teillänge mit reduzierten Durchmesser eine Kohlenstoffverteilung gemessen in Wanddickenrichtung in eines Toleranzbandes von nicht mehr als 10 Prozent auf und/oder die Teillänge mit reduzierten Durchmesser ist frei von Überwalzungen, Schuppen, losen Partikeln oder Späne.

Hierdurch wird eine verbesserte Produktoberfläche durch reduzierte Zunderbildung infolge der geringeren Umformtemperatur, kürzeren Prozesszeiten und Ausschluss von Luftsauerstoff durch ständigen Kontakt zwischen Werkzeug und erwärmter Oberfläche in der Umformzone erreicht.

Auch treten keine Schuppen und lose Partikel an der Produktoberfläche, da keine Überwalzungen stattfinden. Insofern können sich beim späteren Einsatz des Produkts, beispielsweise bei der Auslösung des Airbaggasgenerators, keine derartige Partikel lösen und in den Luftsack (Airbag) gelangen. Des Weiteren könnten derartige Partikel im Werkzeug verbleibend Fehlstellen (pittings) an nachfolgend umgeformten Teilen verursachen.

Infolge der geringeren Umformtemperatur, kürzeren Prozesszeiten und Ausschluss von Luftsauerstoff durch ständigen Kontakt zwischen Werkzeug und erwärmter Oberfläche in der Umformzone wird auch eine Produktoberfläche mit minimierter Abkohlung und Auskohlung ( Weichhaut ) erreicht. Diese ab- und / oder ausgekohlte Oberfläche stellt in konventionell hergestellten Rohrprodukten, insbesondere Airbagrohrprodukten eine Schwachstelle für mechanische Beschädigungen dar.

Auch zeigen Rohrprodukte beziehungsweise Airbagrohrprodukte geringere Entfestigung des Materials in der Umformzone infolge der geringeren Umformtemperatur und kürzerer Prozesszeit.

Ebenso fallen keine Späne am Rohrprodukt an, da der Zerspanungsprozess obsolet ist. Der Verbleib von Spänen im Innern des Generatorgehäuses ist somit sicher auszuschließen. Bei der konventionellen Herstellung von Airbagrohrprodukten können derartige Späne bei der Auslösung des Systems in den Luftsack (Airbag) geschossen und damit Personenschäden verursacht werden.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen.

Es zeigen:
- Figur 1:: ein Ausführungsbeispiel eines Stahlrohres zur Bereitstellung zur Herstellung eines Rohrproduktes mit einem erfindungsgemäßen Verfahren,
- Figur 2:: das Stahlrohr der Figur 1 nach einem erfindungsgemäßen Verfahrensschritt zur Herstellung einer unkalibrierten Vorgeometrie,
- Figur 3:: die Vorgeometrie gemäß Figur 2 nach einem Kalibrieren und
- Figur 4: das fertig hergestellte Rohrprodukt.

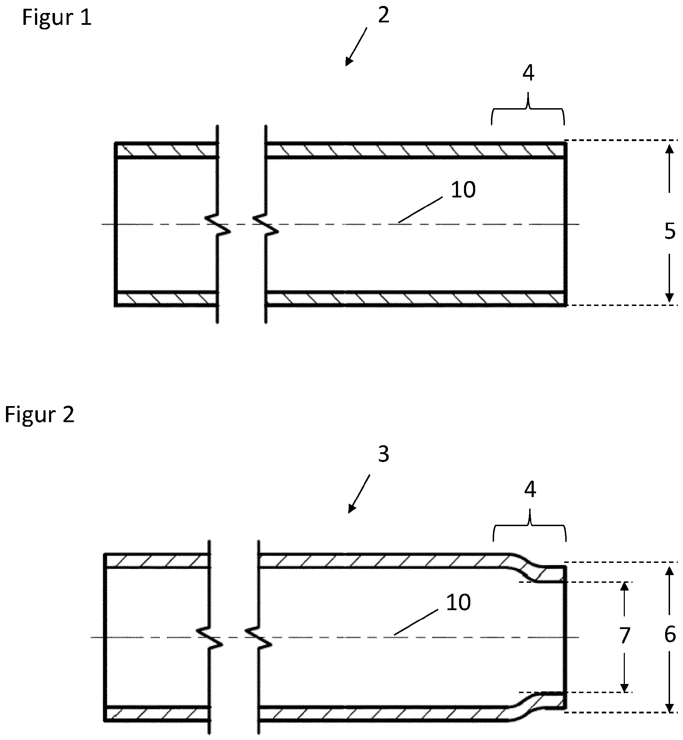

In Figur 1 ist ein Stahlrohr 2 dargestellt, welches als Ausgangsprodukt zur Herstellung eines Rohrproduktes mit einem erfindungsgemäßen Verfahren dient. Das Stahlrohr 2 ist dabei als rotationssymmetrisches Element mit einem konstanten Außendurchmesser 5 ausgebildet, welcher eine als Längsachse ausgebildete Rotationsachse 10 aufweist.

Nach dem Bereitstellen des Stahlrohres 2 wird dieses zu einer Vorgeometrie 3 umgeformt, wobei in einem Endbereich 4 ein Außendurchmesser des Stahlrohres 2 durch axiales Verschieben in ein hier nicht dargestelltes Außenwerkzeug reduziert wird. Ein derartig reduzierter Außendurchmesser 6 ist in der Figur 2 dargestellt, bei dem der Endbereich 4 bereits entsprechend umgeformt jedoch noch nicht kalibriert ist. Dieses Kalibrieren erfolgt bei eingelegter Vorgeometrie 3 in dem hier nicht dargestellten Außenwerkzeug, in dem ein hier ebenfalls nicht dargestellter Innendorn mit einem dem Innendurchmesser7 der kalibrierten Vorgeometrie 3 entsprechenden Außendurchmesser in den Endbereich der Vorgeometrie 3 eingeführt wird. Hierdurch wird der Innendurchmesser 7 der Vorgeometrie 3 durch dieses Umformen kalibriert.

Durch das Reduzieren des Außendurchmessers 5 des Stahlrohres 2 zu dem Außendurchmesser 6vder Vorgeometrie 3 erhöht sich natürlich die Wanddicke in dem Endbereich 4 der Vorgeometrie 3 im Vergleich zur Wanddicke im Endbereich 4 des Stahlrohres 2.

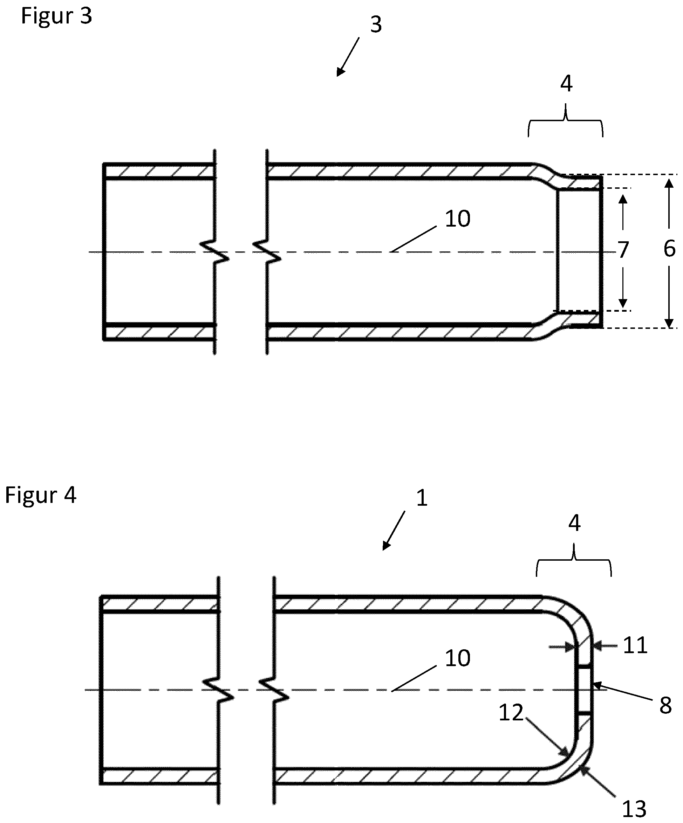

Diese erhöhte Wanddicke wird durch das beschriebene Kalibrieren wieder ausgedünnt. Durch diese Ausdünnung der Wanddicke im Endbereich wird das nachfolgend beschriebene Einrollen des Endbereiches erleichtert und reproduzierbarer gestaltet. Eine derartig kalibrierte Vorgeometrie 3 ist in der Figur 3 dargestellt.

Die Umformungen des Stahlrohres 2 und der Vorgeometrie 3, die zuvor beschrieben wurden, wurden alle durch Kaltumformen beziehungsweise Kalteinziehen durchgeführt. Dabei bedeutet Kaltumformen beziehungsweise Kalteinziehen, dass die Umformung zwischen Raumtemperatur und einer Temperatur kleiner 473 K, insbesondere ohne Vorerwärmung und ohne erwärmte Werkzeuge erfolgt. Zum einfacheren aufeinander abgleiten des Stahlrohres 2 beziehungsweise der Vorgeometrie 3 auf den eingesetzten Werkzeugen und Dornen, können beim Umformen einfache Schmiermittel zwischen den einzelnen Teilen eingesetzt werden.

Um die Vorgeometrie nunmehr zum endgültigen Rohrprodukt 1 umzuformen, erfolgt ein axiales Verschieben der Vorgeometrie in ein in den Figuren nicht dargestelltes Einziehwerkzeug mit einer eine U-förmige Kavität aufweisende Einrollkontur bei gleichzeitigem Umformen der Vorgeometrie zum Rohrprodukt mit einer stirnseitig zentralen, rotationssymmetrischen Auslassöffnung.

Im Rahmen der Erfindung bedeutet U-förmig / topfförmig ein wenigstens teilweise gekrümmter Wandverlauf zwischen Auslassöffnung und unverformten Rohrabschnitten -> z.B. auch halbkugelförmig.

Dieses Umformen erfolgt dabei als Warmumformen beziehungsweise Halbwarmumformen zwischen einer Temperatur von 473 K bis zu einer Ac1-Temperatur des verwendeten Stahls, welche bei den verwendeten Stählen und Stahllegierungen für das Rohrprodukt um 1173 K liegt.

Das Umformen des Endbereiches 4 samt Auslassöffnung 8 des Rohrproduktes 1 erfolgt dabei durch Einlegen eines zweiten, hier ebenfalls nicht dargestellten Innendorns, der eine der Innenkontur des kalibrierten Endbereiches 4 des Rohrproduktes 1 entsprechende Außenkontur aufweist, und ein axiales Verschieben des zweiten Innendorns samt Rohrprodukt in ein zweites, ebenfalls hier nicht dargestelltes Außenwerkzeug, dessen Innenkontur der Außenkontur des kalibrierten Endbereiches 4 des Rohrproduktes 1 entspricht.

In diesem abschließenden durch Warmumformung erfolgten Umformschritt wird beim Einrollen des Endbereiches 4 und nachfolgendem Einführen des zweiten Innendorns eine Querwanddicke 11 stirnseitig wieder leicht reduziert, wobei gleichzeitig eine Optimierung der Geometrie der Auslassöffnung 8 erfolgt. Gleichzeitig werden die Innenradien 12 und Außenradien 13 im Einrollbereich des Endbereiches 4 verringert.

In den hier gezeigten Ausführungsbeispielen erfolgt das Einziehen des Stahlrohres 2 in seinem Endbereich 4 über die Länge, die zum Einrollen der Vorgeometrie 3 und zum Ausbilden der Ausgangsöffnung 8 notwendig ist. In einem weiteren hier nicht dargestellten Ausführungsbeispiel kann das Einziehen über einen größeren Endbereich des Ausgangsstahlrohres 2 erfolgen. Beim späteren Einrollen wird dann allerdings nicht der gesamte eingezogene Endbereich benötigt, sodass sich der Innen- und Außenradius des abschließenden Rohrproduktes in dem nicht eingerollten Endbereich im Vergleich zu den außerhalb des Endbereichs 4 liegenden Längserstreckung des Rohrproduktes entsprechend verringert.

### Bezugszeichenliste

- 1: Rohrprodukt
- 2: Stahlrohr
- 3: Vorgeometrie
- 4: Endbereich
- 5: Außendurchmesser
- 6: Außendurchmesser
- 7: Innendurchmesse
- 8: Auslassöffnung
- 10: Rotationsachse
- 11: Dicke
- 12: Innenradius
- 13: Außenradius

## Patentansprüche

1. Verfahren zur Herstellung eines Rohrproduktes (1), insbesondere eines Airbagrohrproduktes, aus Stahl mit folgenden Schritten:
a) Bereitstellen eines Stahlrohres (2),
b) Umformen des Stahlrohres (2) zu einer Vorgeometrie (3), wobei in einem Endbereich (4) ein Außendurchmesser (5) des Stahlrohres (2) durch axiales Verschieben in ein Außenwerkzeug reduziert wird, und
Kalibrieren eines Innendurchmessers (7) der Vorgeometrie (3), wobei die Vorgeometrie (3) weiterhin in dem Außenwerkzeug eingelegt ist und ein Innendorn mit einem dem Innendurchmesser (7) der kalibrierten Vorgeometrie (3) entsprechenden Außendurchmesser in den Endbereich (4) der Vorgeometrie (3) eingeführt und die Vorgeometrie (3) dabei gegen das Außenwerkzeug gepresst wird, sodass der Innendurchmesser (7) der Vorgeometrie (3) durch Umformen kalibriert wird,
c) Entnahme der Vorgeometrie (3) aus dem Außenwerkzeug und Entnahme des Innendorns aus der Vorgeometrie (3),
d) axiales Verschieben der Vorgeometrie (3) in ein Einziehwerkzeug mit einer eine topfförmige Konkavität aufweisende Einrollkontur bei gleichzeitigem Umformen der Vorgeometrie (3) zum Rohrprodukt (1) mit einer stirnseitig zentralen, rotationssymmetrischen Auslassöffnung (8),
e) Entnahme des Rohrprodukt (1) aus dem Einziehwerkzeug,
**dadurch gekennzeichnet, dass** sowohl in Verfahrensschritte b) als auch in Verfahrensschritte d) auf eine Rotation des Stahlrohrs (2) sowie der Vorgeometrie (3) und des Außenwerkzeuges verzichtet wird.

2. Verfahren nach Anspruch 1, **dadurch gekennzeichnet, dass** das Umformen in Schritt b) als Kaltumformen beziehungsweise Kalteinziehen erfolgt.

3. Verfahren nach einem der vorhergehenden Ansprüche, **dadurch gekennzeichnet, dass** das Umformen in Schritt d) als Warmumformen beziehungsweise Halbwarmumformen erfolgt.

4. Verfahren nach einem der vorhergehenden Ansprüche, **gekennzeichnet durch** ein Fertigformen des Endbereiches (4) samt Auslassöffnung (8) des Rohrprodukt (1) durch Einlegen eines zweiten Innendorns, der eine der Innenkontur des herzustellenden Endbereiches (4) des Rohrproduktes (1) entsprechende Außenkontur aufweist, und ein axiales Verschieben des zweiten Innendorns samt Rohrprodukt (1) in ein zweites Außenwerkzeug, dessen Innenkontur der Außenkontur des herzustellenden Endbereichs (4) des Rohrprodukt (1) entspricht.

5. Verfahren nach Anspruch 3, **dadurch gekennzeichnet, dass** zum Kalibrieren beziehungsweise Fertigformen der Auslassöffnung (8) der zweite Innendorn mit einem stirnseitig zentralen, rotationssymmetrischen Element verwendet wird, dessen Außenkontur der Innenkontur der herzustellenden Auslassöffnung des Rohrprodukt (1) entspricht.

6. Verfahren nach Anspruch 3 oder 4, **dadurch gekennzeichnet, dass** das Kalibrieren des Endbereiches (4) und/oder der Auslassöffnung (8) bei einer Restwärme eines in Schritt e) durchgeführten Warm- beziehungsweise Halbwarmumformen erfolgt, insbesondere bei einer Temperatur von mindestens 473 K beziehungsweise kleiner einer Ac1-Temperatur des verwendeten Stahls beziehungsweise der verwendeten Stahllegierung.

7. Verfahren nach einem der vorhergehenden Ansprüche, **dadurch gekennzeichnet, dass** das Rohrprodukt vor Schritt d) auf >Ac3-Temperatur erwärmt und nach dem Schritt d) beziehungsweise im Falle eines Kalibrierens der Auslassöffnung aktiv abgekühlt wird, so dass sich ein wenigstens teilweise gehärtetes Gefüge in der Stahllegierung einstellt.

8. Verfahren nach einem der vorhergehenden Ansprüche, **dadurch gekennzeichnet, dass** als Stahl für das Stahlrohr eine Stahllegierung und insbesondere ein härtbarer höchstfester-Stahl verwendet wird.

9. Verfahren nach Anspruch 6, **dadurch gekennzeichnet, dass** als Werkstoff des Rohres beziehungsweise des daraus herzustellenden Rohrprodukte ein Stahl verwendet wird, der außer Eisen und unvermeidbaren schmelzbedingten Verunreinigungen die folgenden Legierungselemente in Gewichtsprozent aufweist:
C 0,07 - 0,50, vorzugsweise 0,07 - 0,20;
Si 0,05 - 0,55;
Mn 0,2 - 2,5, vorzugsweise 0,4 - 0,8;
P < 0,025; S < 0,02;
Cr < 2 vorzugsweise 0,8 - 1,0;
Ti < 0,03, vorzugsweise < 0,015;
Mo < 0,6, vorzugsweise 0,25 - 0,4;
Ni < 0,6, vorzugsweise 0,2 - 0,3;
Al 0,001 - 0,05, vorzugsweise 0,02 - 0,04; 25
V < 0,5, vorzugsweise < 0,1;
Nb < 0,1, vorzugsweise < 0,06.

10. Verfahren nach einem der vorhergehenden Ansprüche, **dadurch gekennzeichnet, dass** das hergestellte Rohrprodukt (1) eine Zugfestigkeit von 700 MPa, vorzugweise von mindestens 900 MPa aufweist.

## Claims

1. Method for producing a pipe product (1), in particular an airbag pipe product, from steel, comprising the following steps:
a) providing a steel pipe (2),
b) forming the steel pipe (2) into a preliminary geometry (3), wherein in an end region (4), an outer diameter (5) of the steel pipe (2) is reduced by axial displacement into an outer tool, and calibrating an inner diameter (7) of the preliminary geometry (3), wherein the preliminary geometry (3) is further inserted in the outer tool and an inner mandrel with an outer diameter corresponding to the inner diameter (7) of the calibrated preliminary geometry (3) is inserted into the end region (4) of the preliminary geometry (3) and the preliminary geometry (3) is pressed against the outer tool, such that the inner diameter (7) of the preliminary geometry (3) is calibrated by forming,
c) removing the preliminary geometry (3) from the outer tool and removing the inner mandrel from the preliminary geometry (3),
d) axially displacing the preliminary geometry (3) into a drawing tool with a roll contour having a pot-shaped concavity while simultaneously forming the preliminary geometry (3) into the pipe product (1) with a central, rotationally-symmetrical outlet opening (8) at the front end,
e) removing the pipe product (1) from the drawing tool, **characterised in that** in both method steps b) and d) rotation of the steel pipe (2) as well as the preliminary geometry (3) and the outer tool is dispensed with.

2. Method according to claim 1, **characterised in that** the forming in step b) is carried out as cold forming or cold drawing.

3. Method according to any one of the preceding claims, **characterised in that** the forming in step d) is carried out as hot forming or semi-hot forming.

4. Method according to any one of the preceding claims, **characterised by** finishing the end region (4) together with the outlet opening (8) of the pipe product (1) by inserting a second inner mandrel which has an outer contour corresponding to the inner contour of the end region (4) of the pipe product (1) to be produced, and axially displacing the second inner mandrel together with the pipe product (1) into a second outer tool, the inner contour of which corresponds to the outer contour of the end region (4) of the pipe product (1) to be produced.

5. Method according to claim 3,
**characterised in that**, in order to calibrate or finish the outlet opening (8), the second inner mandrel is used with a central, rotationally-symmetrical element at the front end, the outer contour of which corresponds to the inner contour of the outlet opening of the pipe product (1) to be produced.

6. Method according to claim 3 or 4,
**characterised in that** the calibration of the end region (4) and/or the outlet opening (8) takes place at a residual heat of hot or semi-hot forming carried out in step e), in particular at a temperature of at least 473 K or less than an Ac1 temperature of the steel used or steel alloy used.

7. Method according to any one of the preceding claims, **characterised in that** the pipe product is heated to >Ac3 temperature before step d) and is actively cooled after step d) or in the case of calibration of the outlet opening, such that an at least partially hardened structure is established in the steel alloy.

8. Method according to any one of the preceding claims, **characterised in that** a steel alloy and in particular a hardenable high-strength steel is used as the steel for the steel pipe.

9. Method according to claim 6,
**characterised in that** the material used for the pipe or the pipe products to be produced therefrom is a steel which, in addition to iron and unavoidable impurities caused by the melting process, has the following alloying elements in percentage by weight:
C 0.07 - 0.50, preferably 0.07 - 0.20;
Si 0.05 - 0.55;
Mn 0.2 - 2.5, preferably 0.4 - 0.8;
P < 0.025; S < 0.02;
Cr < 2 preferably 0.8 - 1.0;
Ti < 0.03, preferably < 0.015;
Mo < 0.6, preferably 0.25 - 0.4;
Ni < 0.6, preferably 0.2 - 0.3;
Al 0.001 - 0.05, preferably 0.02 - 0.04; 25
V < 0.5, preferably < 0.1;
Nb < 0.1, preferably < 0.06.

10. Method according to any one of the preceding claims, **characterised in that** the produced pipe product (1) has a tensile strength of 700 MPa, preferably of at least 900 MPa.

## Revendications

1. Procédé de fabrication d'un produit tubulaire (1), en particulier d'un produit tubulaire pour airbag, en acier, comprenant des étapes suivantes :
a) mise à disposition d'un tube en acier (2),
b) formage du tube en acier (2) en une prégéométrie (3), dans lequel le diamètre extérieur (5) du tube en acier (2) est réduit dans une zone d'extrémité (4) par déplacement axial dans un outil extérieur, et calibrage d'un diamètre intérieur (7) de la prégéométrie (3),
dans lequel la prégéométrie (3) est en outre insérée dans l'outil extérieur et un mandrin intérieur, ayant un diamètre extérieur correspondant au diamètre intérieur (7) de la prégéométrie (3) calibrée, est introduit dans la zone d'extrémité (4) de la prégéométrie (3), et la prégéométrie (3) est alors pressée contre l'outil extérieur si bien que le diamètre intérieur (7) de la prégéométrie (3) est calibré par formage,
c) retrait de la prégéométrie (3) de l'outil extérieur et retrait du mandrin intérieur de la prégéométrie (3),
d) déplacement axial de la prégéométrie (3) dans un outil d'emmanchement avec un contour d'enroulement présentant une concavité en forme de pot tout en formant simultanément la prégéométrie (3) en le produit tubulaire (1) avec une ouverture de sortie (8) centrale côté frontal, symétrique en rotation,
e) retrait du produit tubulaire (1) de l'outil d'emmanchement,
**caractérisé en ce que**, tant dans les étapes de procédé b) que dans les étapes de procédé d), on renonce à une rotation du tube en acier (2) ainsi que de la prégéométrie (3) et de l'outil extérieur.

2. Procédé selon la revendication 1, **caractérisé en ce que** la mise en forme à l'étape b) est effectuée sous la forme d'une mise en forme à froid ou d'une rétraction à froid.

3. Procédé selon l'une quelconque des revendications précédentes, **caractérisé en ce que** la mise en forme à l'étape d) est effectuée sous la forme d'une mise en forme à chaud ou de mise en forme à tiède.

4. Procédé selon l'une quelconque des revendications précédentes, **caractérisé par** un formage final de la zone d'extrémité (4) y compris de l'ouverture de sortie (8) du produit tubulaire (1) par insertion d'un deuxième mandrin intérieur qui présente un contour extérieur correspondant au contour intérieur de la zone d'extrémité (4) du produit tubulaire (1) à fabriquer, et un déplacement axial du deuxième mandrin intérieur avec le produit tubulaire (1) dans un deuxième outil extérieur dont le contour intérieur correspond au contour extérieur de la zone d'extrémité (4) du produit tubulaire (1) à fabriquer.

5. Procédé selon la revendication 3,
**caractérisé en ce que** le deuxième mandrin intérieur avec un élément central côté frontal, symétrique en rotation, dont le contour extérieur correspond au contour intérieur de l'ouverture de sortie du produit tubulaire (1) à fabriquer, est utilisé pour calibrer ou finaliser par formage l'ouverture de sortie (8).

6. Procédé selon la revendication 3 ou la revendication 4,
**caractérisé en ce que** le calibrage de la zone d'extrémité (4) et/ou de l'ouverture de sortie (8) est effectué à une chaleur résiduelle d'une mise en forme à chaud ou à tiède mis en œuvre à l'étape e), en particulier à une température d'au moins 473 K (200 °C) ou inférieure à une température Ac1 de l'acier utilisé ou de l'alliage d'acier utilisé.

7. Procédé selon l'une quelconque des revendications précédentes, **caractérisé en ce que** le produit tubulaire est chauffé avant l'étape d) à une température >Ac3 et est refroidi activement après l'étape d) ou dans le cas d'un calibrage de l'orifice de sortie de telle sorte qu'une structure durcie au moins en partie se forme dans l'alliage d'acier.

8. Procédé selon l'une quelconque des revendications précédentes, **caractérisé en ce qu'**un alliage d'acier et en particulier un acier à ultra-haute résistance durcissable est utilisé comme acier pour le tube en acier.

9. Procédé selon la revendication 6,
**caractérisé en ce qu'**un acier est utilisé comme matériau du tube ou du produit tubulaire à fabriquer à partir de celui-ci, qui présente, outre le fer et les impuretés inévitables dues à la fusion, les éléments d'alliage suivants en pourcentage en poids :
C 0,07 - 0,50, de préférence 0,07 - 0,20 ;
Si 0,05 - 0,55 ;
Mn 0,2 - 2,5, de préférence 0,4 - 0,8 ;
P < 0,025 ; S < 0,02 ;
Cr < 2 de préférence 0,8 - 1,0 ;
Ti < 0,03, de préférence < 0,015 ;
Mo < 0,6, de préférence 0,25 - 0,4 ;
Ni < 0,6, de préférence 0,2 - 0,3 ;
Al 0,001 - 0,05, de préférence 0,02 - 0,04 ; 25
V < 0,5, de préférence < 0,1 ;
Nb < 0,1, de préférence < 0,06.

10. Procédé selon l'une quelconque des revendications précédentes, **caractérisé en ce que** le produit tubulaire (1) fabriqué présente une résistance à la traction de 700 MPa, de préférence d'au moins 900 MPa.
